# FASCICULE DE BREVET EUROPEEN

(11) **EP 3 421 114 B1**
(45) Date de publication et mention de la délivrance du brevet: **05.08.2020**
(21) Numéro de dépôt: 18180601.9
(22) Date de dépôt: 28.06.2018
(51) Int. Cl.: B01D 53/14, B01D 53/18, C10L 3/10

(54) **SYSTEME DE SEPARATION ET D'EPURATION DE DEUX GAZ CONSTITUTIFS D'UN MELANGE GAZEUX**
TRENN- UND REINIGUNGSSYSTEM VON ZWEI GASEN EINES GASGESCHMISCHES
SYSTEM FOR SEPARATING AND CLEANING TWO CONSTITUENT GASES OF A GASEOUS MIXTURE

(30) Priorité: 28.06.2017 FR 1755983
(43) Date de publication de la demande: 02.01.2019
(73) Titulaire: Gaz de Ferme, 65700 Villefranque (FR)
(72) Inventeur: LEBBE, Pierre, 65700 VILLEFRANQUE (FR)
(74) Mandataire: A.P.I. Conseil

(56) Documents cités:
- WO-A1-2015/135921
- WO-A1-2016/005402
- DE-U1- 20 300 663
- JP-A- 2012 050 914
- US-A1- 2013 340 623
- US-A1- 2015 122 120

## Description

### [Domaine de l'invention]

L'invention porte sur un système de séparation et d'épuration de deux gaz constitutifs d'un mélange gazeux. Une application particulièrement intéressante d'un tel système concerne la séparation et l'épuration de méthane et de dioxyde de carbone contenus dans un biogaz.

### [Art antérieur]

Un biogaz est un gaz produit par la fermentation de matières organiques en conditions anaérobies. Ce procédé de fermentation s'appelle également la méthanisation et constitue une voie intéressante de valorisation de la biomasse. Dans le contexte actuel de transition énergétique c'est notamment une source d'énergie renouvelable et locale. Après environ trois semaines de fermentation, le biogaz est principalement constitué de méthane (pour environ 60%) et de dioxyde de carbone (pour environ 40%). Des systèmes de méthanisation sont ainsi de plus en plus fréquemment installés sur les exploitations agricoles, afin de valoriser la biomasse d'origine végétale ou animale qui y est produite, idéalement constituée des déchets, co-produits ou sous-produits de l'activité de la ferme.

Les principaux constituants du biogaz ainsi produits peuvent ensuite être séparés et purifiés afin d'être réutilisés. Ainsi, le bio-méthane issu de cette purification peut remplacer le gaz naturel d'origine fossile. Le bio-dioxyde de carbone épuré, quant à lui, peut être conditionné pour différentes utilisations, parmi lesquelles on peut par exemple citer la soudure, la fabrication de boissons gazeuses, le maraichage, la neutralisation de l'eau, la restauration, la viticulture...

Dans ce contexte, il devient important non seulement d'épurer le méthane (aussi noté CH₄) issu du biogaz, mais également le dioxyde de carbone (encore nommé gaz carbonique et noté CO₂) afin de pouvoir les recycler.

De nombreuses solutions ont déjà été proposées pour valoriser le biogaz brut, et notamment pour purifier le méthane. Pour cela, le gaz carbonique étant un gaz plus lourd que l'air, hydrosoluble et présentant une constante de dissolution bien supérieure à celle du méthane, il est connu de le séparer du méthane par un lavage dans une solution aqueuse. L'eau est préférée comme solution aqueuse de dissolution du CO₂ du fait de son absence de risque sanitaire, de son faible coût et de sa grande disponibilité. Les conditions de dissolution du CO₂ dans l'eau sont décrites par la loi de Henry, qui explique l'équilibre entre une phase gazeuse et une phase liquide à des conditions de température et de pression données. Ainsi, une température basse de l'eau et une pression élevée améliorent la dissolution du CO₂.

Parmi les dispositifs existants de séparation et d'épuration des gaz constitutifs d'un biogaz, le document WO2015/135921 décrit un dispositif comprenant une colonne de séparation se présentant sous la forme d'une cuve surmontée d'une conduite de séparation, la conduite de séparation présentant une section 2 à 3 fois inférieure à celle de la cuve. Le biogaz produit par méthanisation est forcé à circuler dans la conduite de séparation à contre-courant de l'eau qui circule du haut vers le bas en ruisselant. Le CO₂ est alors transféré à l'eau, tandis que le méthane reste dans la phase gazeuse et est récupéré à l'extrémité supérieure de la conduite de séparation. L'eau chargée de CO₂ est quant à elle évacuée vers un bac de dégazage de grand volume, après être passée dans un mélangeur statique à pression atmosphérique, afin de permettre le dégazage du CO₂. Il se produit alors, dans le bac de dégazage, la séparation de l'eau et du dioxyde de carbone, ce-dernier remontant à la surface en microbulles puis étant évacué par un orifice situé sur le bord supérieur du bac pour être dirigé vers un moyen de récupération.

En outre, il a été proposé un dispositif de récupération du CO₂ (US20130340623) comportant une tour d'absorption de CO₂ à écoulement parallèle capable de retirer du CO₂ à partir d'un mélange de gaz en amenant le mélange de gaz en contact avec une solution d'absorption de CO₂ dans un écoulement parallèle puis l'eau gazéifiée est amenée vers une zone de dégazage. Il a également été proposé un procédé de production d'un gaz purifié comportant plusieurs étapes de lavages (WO201605402).

Comme tous les autres dispositifs existants, les dispositifs décrits dans ces documents comprennent généralement, en bas de la cuve, un robinet de vidange pour évacuer l'eau chargée de dioxyde de carbone vers le bac de dégazage. Cependant, l'eau qui chute de la conduite de séparation vers la cuve entraine la formation de bulles de biogaz qui peuvent s'échapper lors de l'évacuation de l'eau si des précautions particulières ne sont pas prises au moment de l'ouverture du robinet de vidange.

### [Problème technique]

La présente invention vise à proposer une solution alternative aux dispositifs de séparation et d'épuration existants, pour permettre de séparer les gaz contenus dans un mélange gazeux, par exemple le méthane et le dioxyde de carbone contenus dans un biogaz, avec un degré de pureté de ces gaz supérieur à 96%, tout en évitant l'apparition de fuites du mélange gazeux. Le système de séparation et d'épuration des gaz constitutifs d'un tel mélange gazeux doit en outre être de construction et d'utilisation simple afin de pouvoir être implanté directement sur les installations agricoles, à proximité des systèmes de méthanisation.

### [Brève description de l'invention]

A cet effet, l'invention a pour objet un système de séparation et d'épuration de deux gaz constitutifs d'un mélange gazeux, comprenant une première colonne de séparation se présentant sous la forme d'une cuve surmontée d'une conduite de séparation, le diamètre de la section transversale de ladite cuve étant au moins 2 fois supérieur à celui de ladite conduite de séparation, une sortie de gaz épuré étant ménagée au sommet de ladite conduite de séparation et une arrivée d'eau sous pression étant ménagée au-dessous de ladite sortie de gaz épuré, ladite conduite de séparation comprenant en outre un garnissage à travers lequel l'eau s'écoule, tandis que ledit mélange gazeux remonte à contre-courant de l'eau depuis un orifice situé dans le quart inférieur de ladite conduite, afin de dissoudre l'un des deux gaz dans l'eau, et de laisser l'autre gaz s'évacuer vers la sortie de gaz épuré; ledit système étant caractérisé en ce qu'il comprend en outre un premier réservoir en communication fluidique avec ladite première colonne de séparation par l'intermédiaire de deux canaux, ledit réservoir comprenant, à son extrémité supérieure, une entrée par laquelle ledit mélange gazeux est injecté sous pression et de préférence, le premier canal de communication fluidique relie un orifice situé dans le fond de la cuve de la colonne de séparation à un orifice situé dans un tiers inférieur du réservoir, ledit premier canal étant apte à équilibrer le niveau d'eau contenu dans la cuve et dans le réservoir selon le principe des vases communiquants ; et le deuxième canal de communication fluidique relie l'orifice d'entrée dudit mélange gazeux, situé sous le garnissage de la conduite de séparation, à un orifice situé dans un tiers supérieur du réservoir, de manière à acheminer ledit mélange gazeux injecté sous pression par le sommet du réservoir, vers l'orifice d'entrée de la conduite de séparation.

Ainsi, le mélange gazeux sous pression n'est pas injecté directement dans la conduite de séparation mais dans un réservoir en communication fluidique avec ladite conduite. Ce réservoir permet aussi à l'eau gazéifiée en provenance de la cuve de la colonne de séparation de laisser s'échapper des bulles de biogaz susceptibles d'être entrainées avec l'eau lors de sa chute de la conduite de séparation vers la cuve. Les bulles de biogaz s'échappent alors dans le ciel gazeux situé au-dessus du niveau d'eau dans le réservoir. Le système selon l'invention ne comprend pas de robinet d'évacuation de l'eau gazéifiée en partie basse de la cuve et il permet ainsi d'éviter l'apparition de fuites de biogaz lors de l'ouverture d'un tel robinet.

Selon d'autres caractéristiques optionnelles du système :
- le premier canal de communication fluidique présentent un diamètre étant 5 à 7 fois inférieur à celui de la cuve et du réservoir et comprend au moins deux coudes ;
- le système comprend en outre une deuxième colonne de séparation alimentée, par une arrivée ménagée en partie supérieure, en eau gazéifiée issue du premier réservoir, ladite deuxième colonne se présentant sous la forme d'une cuve surmontée d'une conduite de séparation, le diamètre de la section transversale de ladite cuve étant au moins 2 fois supérieur à celui de ladite conduite de séparation, ladite conduite de séparation comprenant en outre un garnissage à travers lequel l'eau gazéifiée s'écoule; et ladite deuxième colonne de séparation est en communication fluidique avec un deuxième réservoir dont un orifice de sortie, situé à son sommet et raccordé à une pompe à vide, permet d'évacuer le gaz se désorbant de l'eau vers un moyen de récupération dédié, la communication fluidique entre la deuxième colonne de séparation et ledit deuxième réservoir étant réalisée par l'intermédiaire d'un troisième et d'un quatrième canal, de préférence, le troisième canal de communication fluidique relie un orifice situé dans le fond de la cuve de la deuxième colonne de séparation à un orifice situé dans un tiers inférieur du deuxième réservoir, ledit troisième canal étant apte à équilibrer le niveau d'eau contenue dans la cuve et dans le deuxième réservoir selon le principe des vases communiquants ; et le quatrième canal de communication fluidique relie un orifice de sortie du gaz se désorbant de l'eau, situé sous le garnissage de la deuxième conduite de séparation, à un orifice ménagé dans un tiers supérieur dudit deuxième réservoir, de manière à acheminer ledit gaz, se désorbant de l'eau, de l'orifice de sortie de la conduite de séparation vers l'orifice de sortie dudit deuxième réservoir;
- le troisième canal de communication fluidique présente un diamètre étant 5 à 7 fois inférieur à celui de la cuve et du réservoir et comprend au moins deux coudes. De préférence, le premier et le troisième canal de communication fluidique présentent un diamètre étant 5 à 7 fois inférieur à celui de la cuve et du réservoir et comprennent au moins deux coudes. Ces canaux permettent de véhiculer du gaz ;
- le deuxième et le quatrième canal de communication fluidique, permettant de véhiculer du gaz, présentent une section dont le diamètre s'élargit depuis l'orifice du réservoir jusqu'à l'orifice de la conduite de séparation, de sorte que le diamètre de l'orifice ménagé dans la conduite de séparation est au moins 2 fois plus grand que celui de l'orifice ménagé dans le réservoir ;
- le mélange gazeux est un biogaz, le gaz hydrosoluble qui se dissout dans l'eau est du dioxyde de carbone (CO₂) et le gaz épuré qui s'évacue dans la partie supérieure de la première conduite de séparation est du méthane (CH₄) ;
- le premier et/ou le deuxième réservoir comprend trois sondes, disposées les unes au-dessus des autres sur la paroi dudit réservoir, aptes à détecter le niveau de l'eau dans ledit réservoir et reliées à une unité de commande du système qui permet de déclencher, selon le niveau d'eau détecté dans ledit réservoir, le fonctionnement ou l'arrêt d'une première pompe à eau permettant l'alimentation en eau sous pression de la première conduite de séparation et/ou d'un compresseur permettant l'injection dudit mélange gazeux sous pression dans ledit premier réservoir et/ou d'une électrovanne raccordée en pied dudit premier réservoir pour permettre une vidange dudit premier réservoir et l'alimentation en eau gazéifiée de la deuxième conduite de séparation et/ou d'une pompe à vide permettant l'évacuation du gaz se désorbant de l'eau et/ou d'une deuxième pompe à eau raccordée en pied dudit deuxième réservoir pour permettre une vidange dudit deuxième réservoir;
- la pression régnant dans la première colonne de séparation et dans le premier réservoir est supérieure à 3 bar, de préférence supérieure à 4 bar, de façon plus préférée supérieure à 5 bar, par exemple comprise entre 4 et 8 bar au-dessus de la pression atmosphérique et la pression régnant dans la deuxième colonne de séparation et dans le deuxième réservoir est inférieure à la pression atmosphérique, de préférence inférieure à -0,5 bar, de façon plus préférée inférieure à -0,7 bar, par exemple comprise entre -0,5 et -1 bar ;
- l'eau injectée sous pression dans la première colonne de séparation présente une température inférieure ou égale à 15°C, de préférence inférieure ou égale à 10°C, et de façon plus préférée inférieure ou égale à 5°C ; Ainsi, le système comprend avantageusement un moyen de refroidissement de l'eau, de préférence positionné en amont de l'arrivée d'eau sous pression et, apte à refroidir l'eau à une température inférieure à 15°C.
- le débit de l'eau injectée sous pression dans la première colonne de séparation est compris entre 10 et 40 L/min, de préférence entre 20 et 30 L/min ;
- le garnissage dans les conduites de séparation des première et deuxième colonnes de séparation présente une hauteur comprise entre 1,5 m et 4 m. De préférence, la première colonne de séparation, colonne de lavage, est plus grande que la première colonne de séparation. De façon plus préférée, la deuxième colonne, colonne de dégazage, est présente une hauteur comprise entre 1 m et 3 m.

L'invention porte en outre sur un procédé de séparation et d'épuration de deux constituants d'un mélange gazeux mis en œuvre à partir d'un système selon l'invention. Avantageusement, dans le cadre de ce procédé, la pression régnant dans la première colonne de séparation et dans le premier réservoir est supérieure à 3 bar et la pression régnant dans la deuxième colonne de séparation et dans le deuxième réservoir est inférieure à la pression atmosphérique, de préférence inférieure à -0,5 bar, de façon plus préférée inférieure à -0,7 bar, par exemple comprise entre -0,5 et -1 bar.

De façon préférée, le débit de l'eau injectée sous pression dans la première colonne de séparation est compris entre 10 et 40 L/min, de façon plus préférée entre 20 et 30 L/min.

Selon d'autres caractéristiques optionnelles du système :
- le mélange gazeux est un biogaz, le gaz hydrosoluble qui se dissout dans l'eau est du dioxyde de carbone (CO₂) et le gaz épuré qui s'évacue dans la partie supérieure de la première conduite de séparation est du méthane (CH₄) ;
- la pression régnant dans la première colonne de séparation et dans le premier réservoir est fonction d'une part d'une introduction du mélange gazeux par l'orifice et d'autre part d'une introduction d'eau réfrigérée, par une pompe à eau par l'arrivée d'eau en partie haute de la colonne et retenue par une électrovanne à l'extrémité d'un canal raccordé à un orifice ménagé dans le fond bombé du réservoir ;

- la dépression régnant dans la deuxième colonne de séparation et dans le deuxième réservoir est fonction d'une part d'une électrovanne positionnée à l'extrémité d'un canal raccordé à un orifice ménagé dans le fond bombé du réservoir et d'autre part d'un clapet anti retour positionné sur la sortie d'une pompe de vidange, la dépression étant assurée par une pompe à vide ;

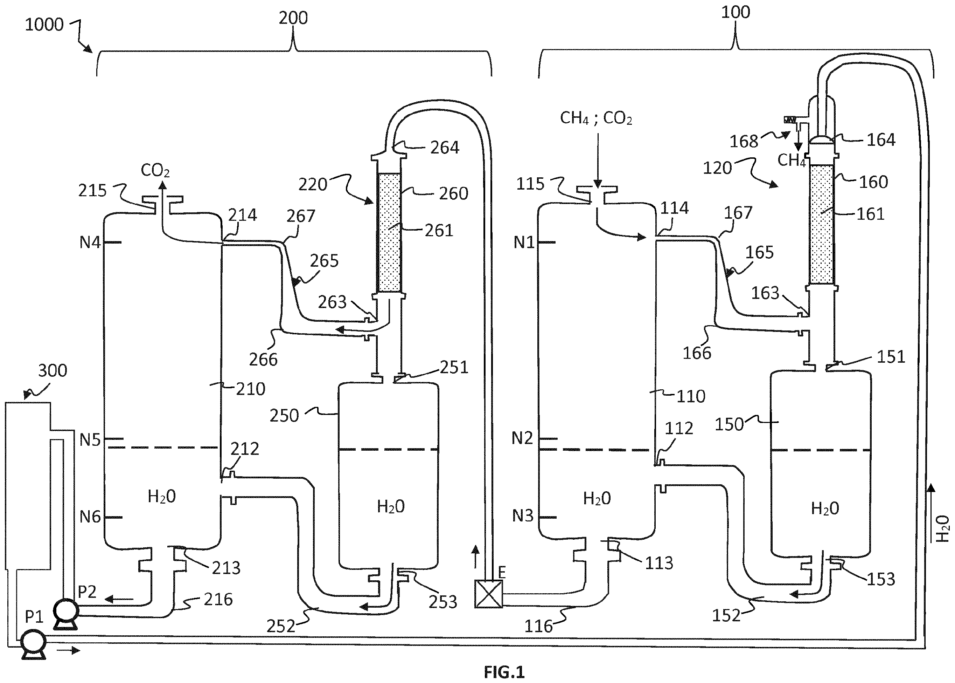

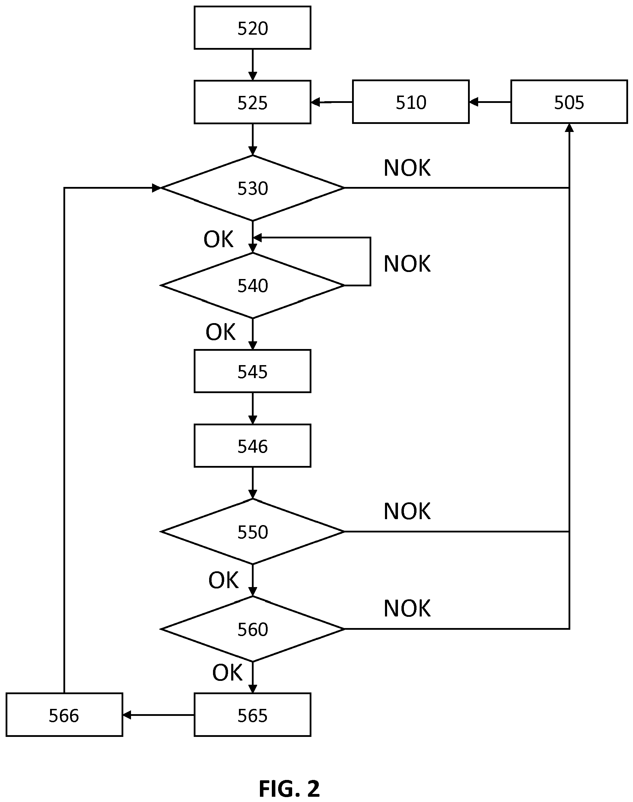

D'autres particularités et avantages de l'invention apparaitront à la lecture de la description suivante faite à titre d'exemple illustratif et non limitatif, en référence à la Figure 1 annexée qui représente, très schématiquement, un système de séparation et d'épuration de deux gaz, le méthane et le dioxyde de carbone, constituants principaux d'un biogaz.

### [Description détaillée de l'invention]

La pureté d'un gaz est la propriété qui exprime la part occupée par le composé principal dans le mélange gazeux. Elle est exprimée en pourcentage, de préférence volumique. Elle peut par exemple être mesurée au moyen d'un analyseur classique du marché raccordé sur la sortie d'extraction du gaz à analyser. Un tel analyseur pourra par exemple être l'analyseur commercialisé par la société Geotech sous le nom commercial « Biogas 5000 ».

Les colonnes, cuves, conduites, réservoirs décrits dans la suite de la description sont des contenants cylindriques disposés de sorte que leur axe longitudinal est perpendiculaire au sol et définit leur hauteur. Leur section transversale coupe leur hauteur perpendiculairement, le long de leur diamètre.

Ces contenants peuvent être virtuellement découpés en trois ou quatre parties égales le long de leur hauteur. Ainsi, on entend par quart inférieur et quart supérieur d'un contenant respectivement le premier quart situé à la base du contenant et le premier quart situé au sommet du contenant. De même, on entend par tiers inférieur et tiers supérieur d'un contenant respectivement le premier tiers situé à la base du contenant et le premier tiers situé au sommet du contenant.

Le système selon l'invention, référencé 1000 sur la Figure 1, comprend avantageusement deux dispositifs raccordés en série. Un premier dispositif, référencé 100, est plus particulièrement dédié à la séparation des deux gaz constitutifs du biogaz, et à l'extraction de l'un des deux gaz, en l'occurrence le méthane, avec un degré de pureté élevé. Le deuxième dispositif, référencé 200, est plus particulièrement dédié au dégazage de la solution aqueuse issue du dispositif 100 de séparation et chargée en dioxyde de carbone et à la récupération du dioxyde de carbone avec un degré de pureté élevé. Le système selon l'invention peut également être utilisé pour séparer d'autres gaz présentant des solubilités dans l'eau variable en fonction de la pression come par exemple le sulfure d'hydrogène.

Le dispositif 100 dédié à la séparation des gaz comprend avantageusement une colonne de séparation 120 se présentant sous la forme d'une cuve cylindrique 150 surmontée d'une conduite de séparation 160. Le diamètre de la section transversale de la cuve cylindrique 150 est au moins 2 fois supérieur à celui de la conduite de séparation 160. De préférence, le diamètre de la section transversale de la cuve cylindrique 150 est au moins 3 fois supérieur à celui de la conduite de séparation 160. De façon très avantageuse, l'aire de la section transversale de la cuve cylindrique 150 est au moins 5 fois plus grande, de façon préférée au moins 7 fois plus grande et de façon encore plus préférée au moins 9 fois plus grande que l'aire de la section transversale de la conduite de séparation 160.

La conduite de séparation comprend en partie haute, avantageusement dans le quart supérieur de la conduite, une arrivée d'eau 164 sous pression, en provenance d'un container 300 de préférence réfrigéré et pouvant être enfoui sous terre ou positionné en surface. Une pompe à eau P1, raccordée au container, permet d'acheminer l'eau sous pression vers l'arrivée 164 d'eau de la conduite de séparation. L'eau s'écoule à travers un garnissage 161 disposé dans la conduite de séparation 160. Avantageusement, le container 300, positionné comme représenté en figure 1 en amont de l'arrivée d'eau 164 sous pression, fait office de moyen de refroidissement de l'eau apte à refroidir l'eau à une température inférieure à 15°C. Ainsi, avantageusement, le container 300 est apte à refroidir l'eau à une température inférieure à 15°C, de préférence inférieure ou égale à 10°C, et de façon plus préférée inférieure ou égale à 5°C. En effet, les inventeurs ont découvert que l'utilisation d'un tel container 300 réfrigéré permet d'augmenter de plus de 10 % le niveau de pureté du CH₄ produit.

Un orifice 163 d'entrée du mélange gazeux sous pression, c'est-à-dire du biogaz dans cet exemple d'application, est disposé dans le quart inférieur de la conduite de séparation 160 et, de préférence, juste en dessous du garnissage 161. Comme présenté en figure 1, l'orifice 163 peut être positionné entre le garnissage 161 et un orifice 151, situé dans la partie supérieure de la cuve 150 de la colonne de séparation 120. Le mélange gazeux s'écoule alors de manière ascendante, à contre-courant de l'eau, si bien que le dioxyde de carbone, très hydrosoluble, contenu dans le biogaz se dissout dans l'eau au fur et à mesure que le gaz s'élève.

Le garnissage 161 forme un labyrinthe à travers lequel transitent à contre-courant l'eau sous pression et le biogaz également sous pression. Le garnissage peut être un garnissage en vrac, par exemple un garnissage de type plastique. Il peut notamment être constitué par des anneaux de Raschig. Le garnissage forme ainsi une grande surface de contact pour que l'eau qui s'écoule et le biogaz qui remonte puissent être mis au contact l'un de l'autre. Généralement et plus encore dans le cadre du procédé selon l'invention, le méthane est un gaz très peu soluble dans l'eau alors que le CO₂ est très soluble. Par conséquent, au contact de l'eau, le dioxyde de carbone contenu dans le biogaz se dissout dans l'eau. Le méthane issu du biogaz, quant à lui, continue de remonter et est évacué par une sortie 168 disposée au-dessus de l'entrée d'eau 164. Le méthane peut être ensuite dirigé vers un sécheur frigorifique, non représenté sur la Figure 1, qui permet de réduire le taux d'humidité relative du méthane comprimé ainsi extrait, puis il est acheminé soit vers un réseau de distribution de gaz, soit vers un moyen de conditionnement. En outre, au niveau de la sortie 168, la présence d'un déverseur, réglable ou non, permet avantageusement de maintenir la pression dans le dispositif 100.

Comme l'opération de lavage du biogaz se passe à contre-courant, l'eau non chargée en gaz carbonique qui rentre par le haut de la conduite de séparation 160 croise un gaz épuré dont le taux de méthane est élevé. Dans ce cas, du méthane peut se dissoudre dans l'eau injectée et non encore chargée en CO₂. Le débit de l'eau injectée dans la colonne de séparation 120 et la hauteur du garnissage 161 dans la conduite de séparation 160 peuvent être déterminés, par des calculs à la portée des connaissances de l'homme du métier, afin de limiter ce phénomène de dissolution du méthane. Dans un exemple préféré de réalisation, lorsque la conduite de séparation présente une section de diamètre égal à 10 cm, la hauteur de garnissage 161 dans la conduite de séparation est comprise entre 1,5 m et 4 m, et de préférence comprise entre 2,5 et 3,5 m et le débit d'eau injectée est compris entre 10 et 40 L/min, de préférence entre 20 et 30 L/min, de façon plus préférée de l'ordre de 25 L/min.

La conduite de séparation 160 présente une section transversale dont le diamètre est inférieur de 2 à 3 ordres de grandeurs au diamètre de la section transversale de la cuve 150. Ce dimensionnement permet d'assurer une vitesse d'écoulement de l'eau, en provenance de la conduite de séparation 160, dans le volume d'eau contenu dans la cuve 150, qui est inférieure à la vitesse ascensionnelle des bulles du mélange gazeux (le biogaz) susceptibles d'être entraînées dans ce même volume d'eau contenu dans la cuve 150. Par exemple, la conduite de séparation 160 peut présenter une section transversale dont le diamètre est compris entre 5 et 15 cm.

Les conditions de dissolution du CO₂ dans l'eau sont fixées par la loi de Henry. Dans ce cas, la température de l'eau ainsi que la pression du gaz sont importantes pour assurer une bonne dissolution. C'est pourquoi, la pression à l'intérieur du dispositif 100 de séparation des gaz du biogaz est de préférence maintenue au-dessus de 3 bar, de façon plus préférée supérieure à 4 bar, de façon encore plus préférée supérieure à 5 bar. Par exemple, la pression à l'intérieur du dispositif 100 de séparation des gaz du biogaz est maintenue comprise entre 4 et 8 bar, et avantageusement entre 5 et 7 bar. Pour maintenir une telle pression dans la colonne 120 et le réservoir 110, un déverseur réglable, non représenté, est fixé sur la sortie de méthane épuré, par exemple après un sécheur frigorifique. De même, pour une dissolution optimale du dioxyde de carbone dans l'eau, la température de l'eau sous pression, injectée en haut de colonne, est de préférence inférieure ou égale à 15°C, de façon plus préférée inférieure ou égale à 10°C, et de façon encore plus préférée inférieure ou égale à 5°C. En effet, le système selon l'invention atteint des performances en termes de rendement et de pureté de CH₄ beaucoup plus élevées lorsque la température de l'eau injectée en haut de colonne est à de telles températures.

De manière très avantageuse, le dispositif de séparation 100 du système de séparation et d'épuration d'un biogaz comprend en outre un premier réservoir cylindrique 110 en communication fluidique avec la colonne de séparation 120 par l'intermédiaire de deux canaux 152 et 165. Ce réservoir 110 comprend un orifice 115 à son sommet, par lequel est injecté le mélange gazeux sous pression, c'est-à-dire le biogaz dans l'exemple d'application décrit, grâce à un compresseur de gaz non représenté sur la Figure 1. De préférence, le réservoir 110 présente un volume supérieur au volume de la cuve 150. De préférence, le réservoir 110 présente un volume supérieur d'au moins 25 % au volume de la cuve 150 (i.e. un volume équivalent à plus de 125% du volume de la cuve 150), de façon plus préférée d'au moins 50 %, de façon encore plus préférée d'au moins 75 %. Une telle dimension pour le réservoir 110 permet d'augmenter les rendements et/ou la pureté des gaz séparés. Par exemple, le réservoir 110 peut présenter un volume compris entre 0,5 m³ et 2 m³ et dans ce cas la cuve 150 présente un volume compris entre 0,25 m³ et 1 m³.

Un premier canal 152 relie un orifice 153, situé dans le fond bombé de la cuve 150 de la colonne de séparation 120, à un orifice 112 ménagé sur la paroi du tiers inférieur du réservoir 110. Ce premier canal de communication fluidique permet d'équilibrer la hauteur des niveaux d'eau, chargée en dioxyde de carbone, contenue dans la cuve 150 et le réservoir 110 selon le principe des vases communiquant. Selon un exemple de mise en œuvre, le niveau d'eau dans la cuve 150 et dans le réservoir 110 est fixé à 50 cm de hauteur.

Le fait de déverser l'eau chargée de dioxyde de carbone de la cuve 150 vers le réservoir 110, selon le principe des vases communiquant, présente plusieurs avantages. Un premier avantage réside dans le fait que l'eau chargée de dioxyde de carbone n'est pas directement évacuée par un robinet situé en bas de la cuve 150 si bien qu'il n'y a pas de risque d'apparition de fuites de biogaz, qui aurait été entrainé dans l'eau du fait des remous créés lors de la chute de l'eau dans la cuve. Dans ce cas, la cuve 150 ne peut pas se vider en dessous de son niveau d'équilibre. Ainsi, l'eau qui chute de la conduite de séparation 160 dans le volume d'eau de la cuve 150, entraine la formation de grosses bulles de biogaz qui ne peut pas s'échapper de la cuve. Ces bulles de biogaz, lorsqu'elles franchissent le canal 152, peuvent alors se dissiper dans le ciel gazeux du réservoir 110 formé par le biogaz comprimé injecté dans le réservoir, au-dessus du niveau d'eau chargée en dioxyde de carbone. Ainsi, les pertes en méthane dans l'eau pressurisée et chargée de CO₂ dissout sont évitées. Un autre avantage de ce canal 152 réside dans le fait que réservoir 110 comprend des sondes, permettant de détecter le niveau de l'eau, qui ne sont pas perturbées par des éclaboussures dues à la formation de bulles, puisque ces bulles ne se forment que dans la cuve 150.

Pour permettre aux bulles et micro-bulles de biogaz entrainé dans l'eau de s'évacuer dans le ciel gazeux du réservoir 110 via le canal 152, le canal présente une forme et des dimensions particulières. Plus particulièrement, un compromis doit être effectué sur le diamètre du canal 152 pour que les bulles de biogaz, ayant été entrainées dans le volume d'eau de la cuve 150, puissent s'écouler vers le réservoir 110 et remonter vers le ciel gazeux du réservoir 110 plus rapidement que la vitesse d'écoulement de l'eau vers le réservoir 110. Pour cela, le diamètre du canal 152 doit être suffisamment grand pour que les bulles de biogaz s'écoulent plus rapidement que l'eau, mais pas trop grand afin de ne pas freiner, voire stopper, l'écoulement de l'eau. Par exemple, le canal 152 présente une longueur d'au moins 50 cm et d'au plus 1,5 m. De manière avantageuse, le canal 152 présente un diamètre de 5 à 7 fois inférieur à celui de la cuve 150 et du réservoir 110. Ainsi, pour une cuve 150 et un réservoir 110 dont le diamètre de la section transversale est égal à 30 cm, l'orifice 153 présente avantageusement un diamètre compris entre 45 et 60 mm, de préférence 51 mm, de manière à pouvoir raccorder un tube en acier inoxydable de 51 mm de diamètre. Ce canal de communication fluidique 152 comprend au moins deux coudes, de préférence trois coudes à 90°. Dans un exemple, il comprend avantageusement un premier coude à 90° situé sous le raccord de l'orifice 153, puis un tube de même diamètre et de longueur comprise entre 10 et 20 cm, de préférence de l'ordre de 15 cm, puis un coude à 90° de manière à y raccorder un autre tube de même diamètre remontant verticalement sur une hauteur comprise entre 20 et 40 cm, de préférence 30 cm, et enfin un 3^{ème} coude à 90° et un raccord de même diamètre pour se raccorder sur l'orifice 112 ménagé dans le tiers inférieur de la paroi du réservoir 110. Le choix du diamètre de 51 mm pour le canal 152 permet avantageusement un passage de l'eau gazéifiée de la cuve 150 vers le réservoir 110 à une vitesse plus lente que le passage des bulles et micro-bulles de biogaz franchissant ce canal. Ainsi, les bulles et micro-bulles de biogaz entrainées dans l'eau peuvent s'évacuer par le premier canal 152 et s'échapper ensuite vers le ciel de biogaz sous pression du réservoir 110.

Le deuxième canal 165, quant à lui, relie l'orifice 163 d'entrée du mélange gazeux, ménagé dans le quart inférieur de la conduite de séparation 160, en dessous du garnissage 161, à un orifice 114 ménagé dans la paroi du tiers supérieur du réservoir 110. De préférence, l'orifice 114 est ménagé à une vingtaine de cm du sommet du réservoir 110, ledit réservoir mesurant par exemple 1,50 m de hauteur et présentant une section transversale de diamètre identique à celui de la cuve 150 de la colonne de séparation, par exemple un diamètre de 30 cm. Ce deuxième canal 165 permet avantageusement de véhiculer le mélange gazeux, c'est-à-dire le biogaz, injecté sous pression dans le réservoir 110 vers la colonne de séparation 120. Ce deuxième canal présente de préférence deux coudes 166, 167 à 90° et une section dont le diamètre s'élargit depuis l'orifice 114 du réservoir jusqu'à l'orifice 163 de la colonne de séparation 120. De préférence, cette variation du diamètre de la section n'est pas constante, mais abrupte au niveau du coude 166 situé en regard de l'orifice 163 d'entrée du biogaz dans la conduite de séparation 160. Cette configuration du canal 165 permet d'éviter que l'eau qui chute de la conduite de séparation 160, du fait des remous et des bulles générées lors de la chute, pénètre dans le réservoir 110 via le canal 165 d'acheminement du biogaz. De préférence, l'orifice 163 de la colonne de séparation 120 est deux fois plus grand que l'orifice 114 du réservoir 110. Par exemple, le diamètre de l'orifice 163 peut être compris entre 3 et 7 cm alors que l'orifice 114 peut être compris entre 1 et 4 cm. Avantageusement, le canal 165 présente une longueur d'au moins 10 cm et d'au plus 40 cm.

Un orifice 113 d'évacuation de l'eau est en outre ménagé dans le fond bombé du réservoir 110. Une première extrémité d'un canal d'évacuation 116 est raccordée sur cet orifice 113 tandis que l'autre extrémité est raccordée sur une électrovanne E. Cette électrovanne E permet, lorsqu'elle s'ouvre, de vidanger le réservoir afin de laisser un volume d'eau constant dans le réservoir 110 pendant toute la durée de lavage du biogaz et de la séparation de ses constituants. L'eau chargée en CO₂ ainsi évacuée est alors dirigée vers le dispositif de dégazage 200 afin de récupérer d'une part le CO₂ et d'autre part de l'eau non chargée en gaz qui peut ensuite alimenter le container d'eau 300 avantageusement réfrigéré sur lequel est raccordé la pompe à eau P1 destinée à alimenter en eau le dispositif de séparation 100.

Le réservoir 110 comprend avantageusement 3 sondes N1, N2, N3 permettant de détecter le niveau de l'eau. Elles sont placées les unes au-dessus des autres sur la paroi du réservoir. Ces sondes peuvent se présenter sous différentes formes connues. Elles peuvent par exemple se présenter sous forme de sonde optique, de sonde à ultrasons, de sonde capacitive, de sonde de pression ou de sonde conductive à électrodes par exemple. De préférence, ce sont des sondes à électrodes. Les sondes du bas N3 et du haut N1 sont des sondes de sécurité qui détectent soit un manque d'eau (pour N3) soit un excès d'eau (pour N1). Dans ces deux cas, le système de séparation et d'épuration du biogaz est arrêté. Pour cela, les sondes sont reliées à une unité de commande du système 1000, non représentée sur la Figure 1, qui permet de commander le fonctionnement ou l'arrêt de la pompe à eau P1, du compresseur de biogaz, et de l'électrovanne E.

Ainsi, si la sonde du bas N3 n'est pas noyée dans l'eau au bout d'une durée déterminée de fonctionnement de la pompe à eau P1, par exemple au bout de 5 minutes, alors elle envoie un signal à l'unité de commande du système qui déclenche l'arrêt de la pompe à eau P1 et le maintien en arrêt du compresseur de biogaz. Ce cas peut par exemple se présenter s'il y a un manque d'eau dans le container de stockage de l'eau, ou un dysfonctionnement de la pompe à eau par exemple.

La sonde intermédiaire N2 permet, lorsqu'elle détecte de l'eau, d'envoyer un signal à l'unité de commande du système 1000, qui déclenche alors la mise en fonctionnement du compresseur de biogaz. Il est en effet important que le réservoir 110 contienne de l'eau avant l'injection de biogaz comprimé dans celui - ci afin de ne pas perdre de biogaz dans le cas où l'électrovanne E s'ouvre alors qu'il n'y a pas d'eau. De plus, sans écoulement d'eau dans la colonne de séparation 120, le biogaz ne pourrait pas être lavé et ses constituants ne pourraient pas être séparés. Cette sonde intermédiaire permet en outre d'envoyer un signal permettant de déclencher l'ouverture de l'électrovanne E pour provoquer la vidange du réservoir 110, afin de maintenir toujours le niveau de l'eau dans le réservoir à un niveau d'équilibre constant, fixé par exemple à 50 cm.

La sonde supérieure N1 quant à elle, permet lorsqu'elle détecte de l'eau à sa hauteur, d'envoyer un signal à l'unité de commande du système qui déclenche un arrêt du compresseur de biogaz puis de la pompe à eau P1 et une ouverture de l'électrovanne E. Ce cas peut se produire si la pression dans la colonne de séparation 120 est trop faible et ne permet pas à l'eau gazéifiée de s'évacuer correctement vers le dispositif de dégazage 200 ou bien lorsque l'électrovanne E est défectueuse et ne s'ouvre pas correctement.

Le dispositif 200, dédié au dégazage de l'eau et à l'extraction du CO₂, comprend une deuxième colonne de séparation 220 se présentant sous la forme d'une cuve cylindrique 250 surmontée d'une conduite de séparation 260, de préférence cylindrique. Cette deuxième colonne est avantageusement placée sous vide à une pression pouvant aller par exemple jusqu'à 1 bar en dessous de la pression atmosphérique, de préférence inférieure à -0,5 bar, de façon plus préférée inférieure à -0,7 bar, de façon encore plus préférée inférieure à -0,9 bar, par exemple comprise entre -0,5 et -1 bar. La conduite de séparation 260 comprend en partie haute, avantageusement dans le quart supérieur, une arrivée 264 d'eau chargée en dioxyde de carbone en provenance du premier réservoir 110 du dispositif de séparation 100. Pour cela, lorsque l'électrovanne E est ouverte, l'eau s'évacuant du réservoir 110, passe à travers une deuxième vanne à pointeau, non représentée sur la Figure 1, qui permet de réduire le débit de l'eau. Passé cette vanne, l'eau se dégaze violemment.

Avantageusement, le dispositif 200 comporte une pompe apte à maintenir une pression dans la deuxième colonne de séparation 220 et dans le deuxième réservoir 210, inférieure à la pression atmosphérique, par exemple inférieure à -0,5 bar, de façon préférée, cette pompe est apte à maintenir une pression dans la deuxième colonne de séparation 220 et dans le deuxième réservoir 210, inférieure à -0,7 bar, par exemple comprise entre -0,5 et -1 bar.

L'eau s'écoule à travers un garnissage 261 disposé dans la conduite de séparation 260. Le garnissage 261 forme un labyrinthe à travers lequel transite l'eau chargée de dioxyde de carbone. La colonne étant sous vide, le dégazage de l'eau s'opère. Le garnissage est identique à celui 161 de la première colonne de séparation 120. Le garnissage forme ainsi une grande surface de contact pour que l'eau qui s'écoule puisse se dégazer correctement avant de tomber dans la cuve 250 inférieure. Le CO₂ qui s'échappe est entrainé par une pompe à vide vers un moyen de récupération, via un orifice d'évacuation 263 ménagé dans le quart inférieur de la conduite de séparation 260 et, de préférence, juste en dessous du garnissage 261. Comme présenté en figure 1, l'orifice d'évacuation 263 peut être positionné entre le garnissage 261 et un orifice 251, situé dans la partie supérieure de la cuve 250 de la colonne de séparation 220.

La conduite de séparation 260 présente une section transversale dont le diamètre est inférieur de 2 à 3 ordres de grandeur au diamètre de la section transversale de la cuve 250. Ce dimensionnement permet d'assurer une vitesse d'écoulement de l'eau provenant de la conduite de séparation 260 dans le volume d'eau contenu dans la cuve 250 qui soit inférieure à la vitesse ascensionnelle du dioxyde de carbone gazeux qui se désorbe de l'eau.

De manière très avantageuse, le dispositif de dégazage 200 du système 1000 de séparation et d'épuration d'un biogaz comprend en outre un deuxième réservoir cylindrique 210 en communication fluidique avec la colonne de séparation 220, par l'intermédiaire de deux autres canaux 252 et 265. Ce réservoir comprend un orifice à son sommet, sur lequel est raccordée une pompe à vide non représentée.

Un troisième canal 252 de communication fluidique relie un orifice 253 situé dans le fond bombé de la cuve 250 de la colonne de séparation 220, à un orifice 212 ménagé sur la paroi du tiers inférieur du réservoir 210. Ce canal permet d'équilibrer la hauteur des niveaux d'eau dégazée dans la cuve 250 et le réservoir 210 selon le principe des vases communiquant. Selon un exemple de mise en œuvre, le niveau d'eau dans la cuve et dans le réservoir est fixé à 50 cm de hauteur.

Ce troisième canal 252 présente avantageusement la même forme et les mêmes dimensions que son homologue 152 situé entre la première colonne de séparation 120 et le premier réservoir 110.

Le fait de déverser l'eau dégazée de la cuve 250 vers le réservoir 210, selon le principe des vases communiquant, présente plusieurs avantages. Un premier avantage réside dans le fait que l'eau n'est pas directement évacuée par le fond de cuve et ne risque pas d'entrainer des fuites de CO₂ non dégazé et encore dissout dans l'eau. Dans ce cas, la cuve 250 ne peut pas se vider en dessous de son niveau d'équilibre. Ainsi, l'eau qui chute de la conduite de séparation 260 dans le volume d'eau de la cuve 250, entraine la formation de bulles de CO₂ résiduel. Ces bulles, lorsqu'elles franchissent le canal 252, peuvent alors se dégazer dans le réservoir 210 et être entrainées, grâce au vide créé, vers un moyen de récupération. Ainsi, le CO₂ résiduel non dégazé dans la colonne de séparation 220, est dégazé dans le réservoir 210. Un autre avantage réside dans le fait que le réservoir 210 comprend des sondes, permettant de détecter le niveau de l'eau, qui ne sont pas perturbées par des éclaboussures dues à la formation de bulles, lors de la chute de l'eau, puisque ces bulles ne se forment que dans la cuve 250.

Le quatrième canal 265, quant à lui, relie l'orifice 263 d'évacuation du dioxyde de carbone gazeux, ménagé dans la conduite de séparation 260, en dessous du garnissage 261, à un orifice 214 ménagé dans la paroi du tiers supérieur du réservoir 210. De préférence, l'orifice 214 est ménagé à une vingtaine de cm du sommet du réservoir 210, ledit réservoir mesurant par exemple 1,50 m et présentant une section transversale de diamètre identique à celui de la cuve 250 de la colonne de séparation, par exemple un diamètre de 30 cm. Ce canal 265 permet avantageusement d'évacuer le CO₂, qui se désorbe de l'eau, de la colonne de séparation 220 vers le réservoir 210 puis vers un moyen de récupération non représenté sur la Figure 1.

Ce quatrième canal 265 présente avantageusement la même forme et les mêmes dimensions que son homologue 165 situé entre la première colonne de séparation 120 et le premier réservoir 110. Il présente par exemple deux coudes 266, 267 à 90° et une section dont le diamètre s'élargit depuis l'orifice 214 du réservoir jusqu'à l'orifice 263 de la colonne de séparation 120. De préférence, la variation du diamètre de section n'est pas constante, mais abrupte au niveau du coude 266 situé en regard de l'orifice 263 de sortie du CO₂ gazeux de la conduite de séparation 260. Cette configuration du canal 265 permet d'éviter que l'eau qui chute de la conduite de séparation 260, du fait des remous et des bulles générées lors de la chute, pénètre dans le réservoir 210 via le canal 265 d'évacuation du CO₂.

Un orifice 213 d'évacuation de l'eau dégazée est en outre ménagé dans le fond bombé du deuxième réservoir 210. Une première extrémité d'un canal d'évacuation 216 est raccordée sur cet orifice 213 tandis que l'autre extrémité est raccordée sur une deuxième pompe à eau P2 qui permet de ramener l'eau dans le container 300. Cette pompe P2 permet, lorsqu'elle est mise en fonctionnement, de vidanger le deuxième réservoir 210 afin de laisser un volume d'eau constant dans ledit réservoir 210 pendant toute la durée du dégazage de l'eau. L'eau dégazée ainsi évacuée est alors dirigée vers le container 300 afin d'être à nouveau pompée par la première pompe à eau P1 pour alimenter le dispositif 100 de lavage et de séparation des constituants d'un biogaz.

Tout comme le premier réservoir 110, le deuxième réservoir 210 comprend avantageusement 3 sondes N4, N5, N6 permettant de détecter le niveau de l'eau. Elles sont avantageusement placées les unes au-dessus des autres sur la paroi du réservoir. Ces sondes peuvent se présenter sous différentes formes connues. Elles peuvent par exemple se présenter sous forme de sonde optique, de sonde à ultrasons, de sonde capacitive, de sonde à flotteur, de sonde de pression ou de sonde conductive à électrodes. De préférence, ce sont des sondes à électrodes. Alternativement, ce sont des sondes à flotteurs. Les sondes du bas N6 et du haut N4 sont des sondes de sécurité qui détectent soit un manque d'eau (pour N6) soit un excès d'eau (pour N4). Dans ces deux cas, le système de séparation et d'épuration du biogaz est arrêté. Les sondes sont reliées à l'unité de commande du système 1000, non représentée sur la Figure 1, pour commander le fonctionnement ou l'arrêt de l'électrovanne E, de la pompe à vide, des pompes à eau P1 et P2 et du compresseur de gaz.

Ainsi, si la sonde du bas N6 n'est pas noyée dans l'eau au bout d'une durée déterminée après l'ouverture de l'électrovanne E, par exemple au bout de 5 minutes, alors elle envoie un signal (ou en absence de signal) à l'unité de commande du système qui déclenche, l'arrêt du compresseur de biogaz, l'arrêt de la première pompe à eau P1, et l'arrêt de la pompe à vide. Ce cas peut par exemple se présenter lorsque l'électrovanne est défectueuse et ne s'ouvre pas correctement ou lorsque la différence de pression entre le dispositif de séparation 100 et le dispositif de dégazage 200 n'est pas suffisante, par exemple dans le cas d'une pompe à vide défectueuse ou lorsque le niveau de pression dans le dispositif de séparation 100 ne permet pas de vidange par l'électrovanne.

La sonde intermédiaire N5 permet, lorsqu'elle détecte de l'eau, d'envoyer un signal à l'unité de commande du système 1000, qui déclenche alors la mise en fonctionnement de la deuxième pompe à eau P2 afin d'évacuer l'eau dégazée vers le container 300 et de maintenir constant le niveau de l'eau dans le deuxième réservoir 210, par exemple à 50 cm. La mise en marche de la pompe à vide se fait par l'électrode ou la sonde N5, donc quand l'eau est présente à ce niveau et donc que la pompe P2 est bien amorcée.

La sonde supérieure N4 quant à elle, permet lorsqu'elle détecte de l'eau à sa hauteur, d'envoyer un signal à l'unité de commande du système qui déclenche un arrêt du compresseur de biogaz, de la première pompe à eau P1, une fermeture de l'électrovanne E, un arrêt de la pompe à vide et la mise en fonctionnement de la deuxième pompe à eau P2. Ce cas peut se produire lorsque la deuxième pompe à eau est défectueuse par exemple.

La désorption du CO₂ contenu dans l'eau a une influence sur le pH de l'eau. Ainsi, avec un niveau de vide de 0,5 bar en dessous de la pression atmosphérique, le pH de l'eau a été mesuré à 5,40. En baissant encore le niveau de vide entre 0,7 et 0,8 bar en dessous de la pression atmosphérique, le pH est remonté à 5,60, prouvant ainsi que plus de CO₂ a été désorbé et donc moins de gaz carbonique est resté dissout dans l'eau.

Il a en outre été découvert qu'à débit d'eau constant, de 25 L/min par exemple, et à pression constante de 5,8 bar dans le dispositif de séparation 100, la pression dans le dispositif de dégazage 200 joue sur la pureté du méthane extrait. Ainsi, avec un niveau de vide de -0,5 bar, le méthane extrait présente une pureté de 94%, alors qu'avec un vide de - 0,8 bar, la pureté du méthane extrait est de 96,6%. Le dégazage sous vide de l'eau chargée de CO₂ agit donc sur la qualité de l'épuration du biogaz.

Le système selon l'invention peut également comprendre une unité de liquéfaction apte à liquéfié le CO₂ récupéré.

La liquéfaction peut mettre en œuvre un réfrigérant pouvant être un mélange de réfrigérants choisis parmi typiquement le dioxyde de carbone, le méthane, l'éthane, l'éthylène, le propane, le butane, le pentane. Il peut s'agir d'un cycle basé sur un cycle frigorifique constitué d'un réfrigérant ou d'un mélange de plusieurs réfrigérants.

Alternativement, la liquéfaction peut être une liquéfaction à cycle fermé à l'azote où la puissance de refroidissement générée par la détente de l'azote est transmise par des échangeurs de chaleur au dioxyde de carbone qui passe ainsi à l'état liquide.

**Selon un autre aspect, l'invention porte sur un procédé de séparation et d'épuration** de deux gaz constitutifs d'un mélange gazeux mis en œuvre à partir d'un système selon l'invention.

En particulier, l'invention porte sur un procédé de séparation et d'épuration de deux gaz constitutifs d'un mélange gazeux mis en œuvre à partir d'un système selon l'invention comportant une deuxième colonne de séparation 220 alimentée en eau gazéifiée issue du premier réservoir 110, ladite deuxième colonne de séparation 220 étant en communication fluidique avec un deuxième réservoir 210 dont un orifice de sortie 215, situé à son sommet et raccordé à une pompe à vide, permet d'évacuer le gaz se désorbant de l'eau vers un moyen de récupération dédié, la communication fluidique entre la deuxième colonne de séparation 220 et ledit deuxième réservoir 210 étant réalisée par l'intermédiaire d'un troisième et d'un quatrième canal 252, 265.

Le système selon l'invention peut de préférence être utilisé en combinaison avec un digesteur apte à produire un biogaz comportant majoritairement du méthane et du dioxyde de carbone. Ainsi, le démarrage du système 1000 selon l'invention peut être asservi à la présence de biogaz à épurer.

Le démarrage 520 du système entraine le démarrage 525 de la pompe à eau P1 qui permet d'asperger, au niveau du garnissage 161, une eau à une température de préférence inférieure à 15°C. Le débit de l'eau injectée sous pression dans la première colonne de séparation 120 est de préférence compris entre 10 et 40 L/min.

Lors d'une étape de contrôle de remplissage 530, la sonde N3 positionnée au niveau du premier réservoir 110 détecte le niveau de l'eau dans le pied de la colonne 150. Cela est possible car le pied de colonne 150 et le premier réservoir 110 sont en communication fluidique. Si l'eau n'est pas détectée (NOK) au bout d'une durée prédéterminée alors la pompe à eau est arrêtée 505. Une telle sécurité peut être enclenchée lors du tout premier remplissage de la colonne ou si l'électrovanne E restait anormalement ouverte, ou encore en absence d'eau dans la cuve 300 où la pompe vient puiser l'eau. Un système de sécurité permet à un opérateur de relancer la pompe à eau une fois l'intégrité du système vérifiée.

Lors de l'étape d'initiation 540 de la purification, lorsque la sonde N2 détecte (OK) la présence d'eau à son niveau, elle entraine le démarrage 545 d'un compresseur de biogaz configuré pour transférer le biogaz depuis le digesteur jusqu'au système 1000 selon l'invention. En particulier, le compresseur de biogaz ne s'arrêtera pas quand le niveau de l'eau sera sous le niveau de la sonde N2.

En outre, lorsque la sonde N2 détecte (OK) la présence d'eau à son niveau, elle déclenche également l'ouverture 546 de l'électrovanne E et, se faisant, la pression du biogaz dans le premier réservoir 110 permet d'expulser l'eau vers la colonne 261 de façon à initier l'étape de libération du dioxyde de carbone.

N6 est la sonde qui, de façon similaire à son homologue N3, effectue un contrôle 550 du remplissage du second réservoir 210 et témoigne de la présence (OK) de l'eau dans le second réservoir 210. S'il n'y a pas d'eau détectée (NOK) au bout d'un certain temps le système 1000 est arrêté 505 et attend l'intervention d'un opérateur pour le redémarrage 510 du système.

Lors d'une étape d'initiation de la récupération 560 du dioxyde de carbone, la sonde N5 permet en présence d'eau (OK), de façon similaire à son homologue N2, de démarrer 565 la pompe à vide et de démarrer 566 la pompe de vidange. En particulier, la pompe de vidange sera arrêtée dès que le niveau de l'eau sera en dessous de la sonde N5 alors que la pompe à vide ne s'arrêtera plus quand l'eau passera en dessous de la sonde N5.

Avantageusement, la pression régnant dans la première colonne de séparation 120 et dans le premier réservoir 110 est supérieure à 3 bar et la pression régnant dans la deuxième colonne de séparation 220 et dans le deuxième réservoir 210 est inférieure à -0,5 bar.

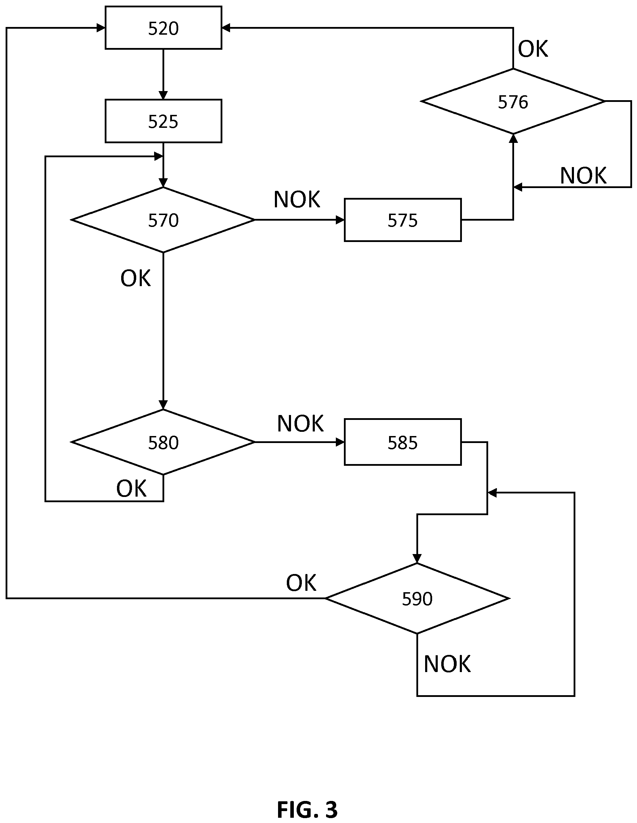

En outre, le procédé selon l'invention comporte une surveillance continue de façon à éviter la survenue d'un niveau trop élevé d'eau dans le système 1000. Ainsi, si les sondes N1 ou N4 détectent un niveau d'eau trop élevé, la pompe d'eau est coupée de même que le compresseur. Cette procédure de surveillance et le comportement détaillé du système au regard de chacune de ces deux sondes sont décrites dans la **figure 3****.**

Comme cela est présenté, de façon préférée, le procédé comporte une étape de surveillance de trop plein 570 dans le premier réservoir 110 durant laquelle si le niveau de l'eau atteint la sonde N1 (NOK), une étape de protection 575 est activée incluant l'arrêt du compresseur et de la pompe à eau, seule l'électrovanne E reste ouverte. Par exemple, une telle situation peut survenir si le compresseur est en panne et qu'il n'y a plus suffisamment de pression de biogaz pour chasser l'eau par l'électrovanne ouverte.

Si le procédé est arrêté après que le niveau de l'eau atteigne la sonde N1, alors le procédé met en place une surveillance 576 du niveau de l'eau dans le premier réservoir 110 et ce n'est que lorsque le niveau de l'eau sera inférieur au niveau de la sonde N2 (OK) que la pompe à eau et le compresseur seront remis en marche.

En particulier, lorsque la sonde N1 détecte l'eau, la colonne de dégazage 200 ne s'arrête pas de fonctionner car il faut qu'elle dégaze et qu'elle évacue l'eau en excès de la colonne de lavage 100.

Le procédé peut également comporter une étape de surveillance de trop plein 580 dans le réservoir 210 durant laquelle, si le niveau de l'eau atteint la sonde N4 (NOK), une étape de protection 585 est activée incluant le maintien fermé de l'électrovanne E ainsi que l'arrêt du compresseur et de la pompe à eau.

Après l'étape de protection 585, le procédé selon l'invention vérifie l'état 590 du détecteur de niveau N5 et si le niveau d'eau dans le réservoir 210 passe en dessous du détecteur de niveau N5 (OK), le procédé est redémarré et dans le cas contraire (NOK), la pompe à vide est arrêtée 595. En effet, la persistance d'un niveau d'eau au-delà du détecteur de niveau N5 témoigne de la difficulté de la pompe de vidange à évacuer cette eau qui est sous vide de -0,8 bar, équivalent à une aspiration de l'eau dans un puit de 8 mètres de profondeur, donc la pompe à vide est également arrêtée.

Ces systèmes de surveillance peuvent permettre de maintenir des niveaux d'eau et de pression permettant un rendement optimal de la séparation. En effet, même de faibles variations dans ces paramètres peuvent avoir un fort impact sur le rendement.

Les inventeurs ont couplé le système selon l'invention avec un digesteur de matière organique ayant la particularité de ne recevoir comme intrants que des déjections animales et des résidus de cultures tel que de la paille. En outre, contrairement à de la méthanisation à base de déchets urbains, les intrants ne comprenaient pas de matières non biologiques telles que des plastiques, des métaux, des antibiotiques, des pierres et minéraux, des hydrocarbures et des produits chimiques. Dans ce contexte, le procédé selon l'invention présente l'avantage de purifier du dioxyde de carbone à partir d'un mélange gazeux provenant d'une fermentation anaérobie d'une matière d'origine biologique renouvelable et non souillée. Cela le différencie des procédés typiques se basant sur l'exploitation de ressources non renouvelables ou sur de la chimie de synthèse.

## Revendications

1. Système (1000) de séparation et d'épuration de deux gaz constitutifs d'un mélange gazeux, comprenant une première colonne de séparation (120) se présentant sous la forme d'une cuve (150) surmontée d'une conduite de séparation (160), le diamètre de la section transversale de ladite cuve (150) étant au moins 2 fois supérieur à celui de ladite conduite de séparation (160), une sortie (168) de gaz épuré étant ménagée au sommet de ladite conduite (160) et une arrivée (164) d'eau sous pression étant ménagée au-dessous de ladite sortie de gaz épuré, ladite conduite de séparation comprenant en outre un garnissage (161) à travers lequel l'eau s'écoule, tandis que ledit mélange gazeux remonte à contre-courant de l'eau depuis un orifice (163) situé dans le quart inférieur de ladite conduite (160), afin de dissoudre l'un des deux gaz dans l'eau, et de laisser l'autre gaz s'évacuer vers la sortie (168) de gaz épuré; ledit système étant **caractérisé en ce qu'il** comprend en outre un premier réservoir (110) en communication fluidique avec ladite première colonne de séparation (120) par l'intermédiaire de deux canaux (152 ; 165), ledit réservoir comprenant, à son extrémité supérieure, une entrée (115) par laquelle ledit mélange gazeux est injecté sous pression, le premier canal (152) de communication fluidique relie un orifice (153) situé dans le fond de la cuve (150) de la colonne de séparation (120) à un orifice (112) situé dans un tiers inférieur du réservoir (110), ledit premier canal (152) étant apte à équilibrer le niveau d'eau contenu dans la cuve (150) et dans le réservoir (110) selon le principe des vases communiquant; et **en ce que** le deuxième canal (165) de communication fluidique relie l'orifice (163) d'entrée dudit mélange gazeux, situé sous le garnissage (161) de la conduite (160) de séparation, à un orifice (114) situé dans un tiers supérieur du réservoir (110), de manière à acheminer ledit mélange gazeux injecté sous pression par le sommet (115) du réservoir (110), vers l'orifice d'entrée (163) de la conduite (160) de séparation.

2. Système selon la revendication 1, **caractérisé en ce que** le premier canal (152) de communication fluidique présentent un diamètre étant 5 à 7 fois inférieur à celui de la cuve (150) et du réservoir (110) et comprend au moins deux coudes.

3. Système selon la revendication 1 ou 2, **caractérisé en ce qu'**il comprend en outre une deuxième colonne de séparation (220) alimentée, par une arrivée (264) ménagée en partie supérieure, en eau gazéifiée issue du premier réservoir (110), ladite deuxième colonne se présentant sous la forme d'une cuve (250) surmontée d'une conduite de séparation (260), le diamètre de la section transversale de ladite cuve (250) étant au moins 2 fois supérieur à celui de ladite conduite de séparation (260), ladite conduite de séparation (260) comprenant en outre un garnissage (261) à travers lequel l'eau gazéifiée s'écoule; et **en ce que** ladite deuxième colonne de séparation (220) est en communication fluidique avec un deuxième réservoir (210) dont un orifice de sortie (215), situé à son sommet et raccordé à une pompe à vide, permet d'évacuer le gaz se désorbant de l'eau vers un moyen de récupération dédié, la communication fluidique entre la deuxième colonne de séparation (220) et ledit deuxième réservoir (210) étant réalisée par l'intermédiaire d'un troisième et d'un quatrième canal (252 ; 265) ; et **en ce que** le troisième canal (252) de communication fluidique relie un orifice (253) situé dans le fond de la cuve (250) de la deuxième colonne de séparation (220) à un orifice (212) situé dans un tiers inférieur du deuxième réservoir (210), ledit troisième canal (252) étant apte à équilibrer le niveau d'eau contenue dans la cuve (250) et dans le deuxième réservoir (210) selon le principe des vases communiquant ; et **en ce que** le quatrième canal (265) de communication fluidique relie un orifice (263) de sortie du gaz se désorbant de l'eau, situé sous le garnissage (261) de la deuxième conduite (260) de séparation, à un orifice (214) ménagé dans un tiers supérieur dudit deuxième réservoir (210), de manière à acheminer ledit gaz, se désorbant de l'eau, de l'orifice (263) de sortie de la conduite (260) de séparation vers l'orifice de sortie (215) dudit deuxième réservoir (210).

4. Système selon la revendication 3, **caractérisé en ce que** le troisième canal (252) de communication fluidique présente un diamètre étant 5 à 7 fois inférieur à celui de la cuve (250) et du réservoir (210) et comprend au moins deux coudes.

5. Système selon l'une des revendications 3 ou 4, **caractérisé en ce que** le deuxième et le quatrième canal (165, 265) de communication fluidique, permettant de véhiculer du gaz, présentent une section dont le diamètre s'élargit depuis l'orifice (114, 214) du réservoir (110, 210) jusqu'à l'orifice (163, 263) de la conduite de séparation (160, 260), de sorte que le diamètre de l'orifice (163, 263) ménagé dans la conduite de séparation (160, 260) est au moins 2 fois plus grand que celui de l'orifice (114, 214) ménagé dans le réservoir.

6. Système selon l'une quelconque des revendications 3 à 5, **caractérisé en ce que** le premier et/ou le deuxième réservoir (110 ; 210) comprend trois sondes (N1, N2, N3 ; N4, N5, N6), disposées les unes au-dessus des autres sur la paroi dudit réservoir (110 ; 210), aptes à détecter le niveau de l'eau dans ledit réservoir et reliées à une unité de commande du système qui permet de déclencher, selon le niveau d'eau détecté dans ledit réservoir (110, 210), le fonctionnement ou l'arrêt d'une première pompe à eau (P1) permettant l'alimentation en eau sous pression de la première conduite de séparation (160) et/ou d'un compresseur permettant l'injection dudit mélange gazeux sous pression dans ledit premier réservoir (110) et/ou d'une électrovanne (E) raccordée en pied dudit premier réservoir (110) pour permettre une vidange dudit premier réservoir (110) et l'alimentation en eau gazéifiée de la deuxième conduite de séparation (260) et/ou d'une pompe à vide permettant l'évacuation du gaz se désorbant de l'eau et/ou d'une deuxième pompe à eau (P2) raccordée en pied dudit deuxième réservoir (210) pour permettre une vidange dudit deuxième réservoir (210).

7. Système selon l'une quelconque des revendications 1 à 6, **caractérisé en ce qu'**il comprend un moyen de refroidissement de l'eau positionné en amont de l'arrivée (164) d'eau sous pression de la première colonne de séparation (120) et apte à refroidir l'eau à une température inférieure à 15°C.

8. Procédé de séparation et d'épuration de deux gaz constitutifs d'un mélange gazeux mis en œuvre à partir d'un système selon l'une quelconque des revendications 3 à 6, **caractérisé en ce que** la pression régnant dans la première colonne de séparation (120) et dans le premier réservoir (110) est supérieure à 3 bar et la pression régnant dans la deuxième colonne de séparation (220) et dans le deuxième réservoir (210) est inférieure à -0,5 bar.

9. Procédé selon la revendication 8, **caractérisé en ce que** l'eau est refroidi à une température inférieure à 15° en amont de l'arrivée (164) d'eau sous pression de la première colonne de séparation (120).

10. Procédé selon l'une des revendications 8 ou 9, **caractérisé en ce que** le débit de l'eau injectée sous pression dans la première colonne de séparation (120) est compris entre 10 et 40 L/min.

11. Procédé selon l'une quelconque des revendications 8 à 10, **caractérisé en ce que** le mélange gazeux est un biogaz, le gaz hydrosoluble qui se dissout dans l'eau est du dioxyde de carbone (CO₂) et le gaz épuré qui s'évacue dans la partie supérieure de la première conduite de séparation est du méthane (CH₄).

12. Procédé selon l'une quelconque des revendications 8 à 11, **caractérisé en ce que** la pression régnant dans la première colonne de séparation (120) et dans le premier réservoir (110) est fonction d'une part d'une introduction du mélange gazeux par l'orifice (115) et d'autre part d'une introduction d'eau réfrigérée, par une pompe à eau (P1) par l'arrivée (164) d'eau en partie haute de la colonne (120) et retenue par une électrovanne (E) à l'extrémité d'un canal (116) raccordé à un orifice ménagé dans le fond bombé du réservoir (110).

13. Procédé selon l'une quelconque des revendications 8 à 12, **caractérisé en ce que** la dépression régnant dans la deuxième colonne de séparation (220) et dans le deuxième réservoir (210) est fonction d'une part d'une électrovanne (E) positionnée à l'extrémité d'un canal (116) raccordé à un orifice ménagé dans le fond bombé du réservoir (110) et d'autre part d'un clapet anti retour positionné sur la sortie d'une pompe de vidange (P2), la dépression étant assurée par une pompe à vide.

## Patentansprüche

1. Trenn- und Reinigungssystem (1000) von zwei Gasen, die ein Gasgemisch bilden, umfassend eine erste Trennsäule (120) in Form eines Behälters (150) mit einer Trennleitung (160) darüber, wobei der Durchmesser des Querschnitts des Behälters (150) mindestens 2 Mal größer als der der Trennleitung (160) ist, wobei ein Auslass (168) gereinigten Gases an der Spitze der Leitung (160) eingerichtet ist und ein Druckwassereinlass (164) unterhalb des Auslasses gereinigten Gases eingerichtet ist, wobei die Trennleitung ferner eine Füllung (161) umfasst, durch die das Wasser fließt, wogegen das Gasgemisch im Gegenstrom zum Wasser ab einer Öffnung (163), die sich im unteren Viertel der Leitung (160) befindet, aufsteigt, um eins der zwei Gase in Wasser zu lösen und das andere Gas durch zum Auslass (168) gereinigten Gases entweichen zu lassen; wobei das System **dadurch gekennzeichnet ist, dass** es ferner einen ersten Vorratsbehälter (110) in Fluidkommunikation mit der ersten Trennsäule (120) über zwei Kanäle (152; 165) umfasst, wobei der Vorratsbehälter an seinem oberen Ende einen Eingang (115) umfasst, durch den das Gasgemisch unter Druck eingeleitet wird, wobei der erste Fluidkommunikationskanal (152) eine Öffnung (153), die sich auf dem Boden des Behälters (150) der Trennsäule (120) befindet, mit einer Öffnung (112) verbindet, die sich in einem unteren Drittel des Vorratsbehälters (110) befindet, wobei der erste Kanal (152) imstande ist, den Pegel des in dem Behälter (150) und in dem Vorratsbehälter (110) enthaltenen Wassers gemäß dem Prinzip der kommunizierenden Röhren auszugleichen; und dass der zweite Fluidkommunikationskanal (165) die Eingangsöffnung (163) des Gasgemischs, die sich unter der Füllung (161) der Trennleitung (160) befindet, mit einer Öffnung (114) verbindet, die sich in einem oberen Drittel des Vorratsbehälters (110) befindet, so dass das durch die Spitze (115) des Vorratsbehälters (110) unter Druck eingeleitete Gasgemisch zur Eingangsöffnung (163) der Trennleitung (160) befördert wird.

2. System nach Anspruch 1, **dadurch gekennzeichnet, dass** der erste Fluidkommunikationskanal (152) einen Durchmesser aufweist, der 5 bis 7 Mal kleiner als der des Behälters (150) und des Vorratsbehälters (110) ist und mindestens zwei Knie umfasst.

3. System nach Anspruch 1 oder 2, **dadurch gekennzeichnet, dass** es ferner eine zweite Trennsäule (220) umfasst, die durch einen im oberen Teil eingerichteten Einlass (264) mit mit Gas versetztem Wasser aus dem ersten Vorratsbehälter (110) versorgt wird, wobei die zweite Säule in Form eines Behälters (250) mit einer Trennleitung (260) darüber vorliegt, wobei der Durchmesser des Querschnitts des Behälters (250) mindestens 2 Mal größer als der der Trennleitung (260) ist, wobei die Trennleitung (260) ferner eine Füllung (261) umfasst, durch die das mit Gas versetzte Wasser fließt; und dass die zweite Trennsäule (220) in Fluidkommunikation mit einem zweiten Vorratsbehälter (210) ist, von dem eine Auslassöffnung (215), die sich an dessen Spitze befindet und an eine Vakuumpumpe angeschlossen ist, erlaubt, das sich vom Wasser desorbierende Gas zu einer speziellen Rückgewinnungseinrichtung abzuleiten, wobei die Fluidkommunikation zwischen der zweiten Trennsäule (220) und dem zweiten Vorratsbehälter (210) über einen dritten und einen vierten Kanal (252; 265) hergestellt ist; und dass der dritte Fluidkommunikationskanal (252) eine Öffnung (253), die sich im Boden des Behälters (250) der zweiten Trennsäule (220) befindet, mit einer Öffnung (212) verbindet, die sich in einem unteren Drittel des zweiten Vorratsbehälters (210) befindet, wobei der dritte Kanal (252) imstande ist, den Pegel des in dem Behälter (250) und im zweiten Vorratsbehälter (210) enthaltenen Wassers gemäß dem Prinzip der kommunizierenden Röhren auszugleichen; und dass der vierte Fluidkommunikationskanal (265) eine Auslassöffnung (263) des sich vom Wasser desorbierenden Gases, die sich unter der Füllung (261) der zweiten Trennleitung (260) befindet, mit einer Öffnung (214) verbindet, die in einem oberen Drittel des zweiten Vorratsbehälters (210) eingerichtet ist, so dass das sich vom Wasser desorbierende Gas von der Auslassöffnung (263) der Trennleitung (260) zur Auslassöffnung (215) des zweiten Vorratsbehälters (210) befördert wird.

4. System nach Anspruch 3, **dadurch gekennzeichnet, dass** der dritte Fluidkommunikationskanal (252) einen Durchmesser aufweist, der 5 bis 7 Mal kleiner als der des Behälters (250) und des Vorratsbehälters (210) ist und mindestens zwei Knie umfasst.

5. System nach einem der Ansprüche 3 oder 4, **dadurch gekennzeichnet, dass** der zweite und der vierte Fluidkommunikationskanal (165, 265), die erlauben, Gas zu transportieren, einen Querschnitt aufweisen, dessen Durchmesser sich ab der Öffnung (114, 214) des Vorratsbehälters (110, 210) bis zur Öffnung (163, 263) der Trennleitung (160, 260) erweitert, so dass der Durchmesser der Öffnung (163, 263), die in der Trennleitung (160, 260) eingerichtet ist, mindestens 2 Mal größer als der der Öffnung (114, 214) ist, die im Vorratsbehälter eingerichtet ist.

6. System nach einem der Ansprüche 3 bis 5, **dadurch gekennzeichnet, dass** der erste und/oder der zweite Vorratsbehälter (110; 210) drei Sonden (N1, N2, N3; N4, N5, N6) umfasst, die übereinander auf der Wand des Vorratsbehälters (110; 210) angeordnet sind, die imstande sind, den Pegel des Wassers in dem Vorratsbehälter zu ermitteln und mit einer Steuereinheit des Systems verbunden sind, das erlaubt, je nach dem im Vorratsbehälter (110, 210) ermittelten Wasserpegel, den Betrieb oder den Stopp einer ersten Wasserpumpe (P1) auszulösen, die die Versorgung der ersten Trennleitung (160) mit Druckwasser erlaubt und/oder eines Kompressors, der die Einleitung des Druckgasgemischs in den ersten Vorratsbehälter (110) erlaubt und/oder eines Elektroventils (E), das am Fuß des ersten Vorratsbehälters (110) angeschlossen ist, um eine Entleerung des ersten Vorratsbehälters (110) und die Versorgung der zweiten Trennleitung (260) mit mit Gas versetztem Wasser zu erlauben und/oder einer Vakuumpumpe, die die Ableitung des sich vom Wasser desorbierenden Gases erlaubt und/oder einer zweiten Wasserpumpe (P2), die am Fuß des zweiten Vorratsbehälters (210) angeschlossen ist, um eine Entleerung des zweiten Vorratsbehälters (210) zu erlauben.

7. System nach einem der Ansprüche 1 bis 6, **dadurch gekennzeichnet, dass** es ein Wasserkühlmittel umfasst, das dem Druckwassereinlass (164) der ersten Trennsäule (120) vorgelagert positioniert und imstande ist, das Wasser auf eine Temperatur unter 15°C zu kühlen.

8. Trenn- und Reinigungsverfahren von zwei Gasen, die ein Gasgemisch bilden, das mit einem System nach einem der Ansprüche 3 bis 6 durchgeführt wird, **dadurch gekennzeichnet, dass** der in der ersten Trennsäule (120) und im ersten Vorratsbehälter (110) herrschende Druck höher als 3 bar ist und der in der zweiten Trennsäule (220) und im zweiten Vorratsbehälter (210) herrschende Druck niedriger als -0,5 bar ist.

9. Verfahren nach Anspruch 8, **dadurch gekennzeichnet, dass** das Wasser vor dem Druckwassereinlass (164) der ersten Trennsäule (120) auf eine Temperatur unter 15°C gekühlt wird.

10. Verfahren nach einem der Ansprüche 8 oder 9, **dadurch gekennzeichnet, dass** der Durchfluss des in die erste Trennsäule (120) eingeleiteten Druckwassers zwischen 10 und 40 L/min liegt.

11. Verfahren nach einem der Ansprüche 8 bis 10, **dadurch gekennzeichnet, dass** das Gasgemisch ein Biogas ist, das wasserlösliche Gas, das sich in Wasser löst, Kohlendioxid (CO₂) ist und das gereinigte Gas, das im oberen Teil der ersten Trennleitung entweicht, Methan (CH₄) ist.

12. Verfahren nach einem der Ansprüche 8 bis 11, **dadurch gekennzeichnet, dass** der in der ersten Trennsäule (120) und im ersten Vorratsbehälter (110) herrschende Druck zum einen von einer Einleitung des Gasgemischs durch die Öffnung (115) und zum anderen von Wasser abhängt, das mittels einer Wasserpumpe (P1) durch den Wassereinlass (164) im hohen Teil der Säule (120) eingeleitet und von einem Elektroventil (E) am Ende eines Kanals (116) zurückgehalten wird, der an eine Öffnung angeschlossen ist, die im gewölbten Boden des Vorratsbehälters (110) eingerichtet ist.

13. Verfahren nach einem der Ansprüche 8 bis 12, **dadurch gekennzeichnet, dass** der in der zweiten Trennsäule (220) und im zweiten Vorratsbehälter (210) herrschende Unterdruck zum einen von einem Elektroventil (E) abhängt, das am Ende eines Kanals (116) positioniert ist, der an eine Öffnung angeschlossen ist, die im gewölbten Boden des Vorratsbehälters (110) eingerichtet ist, und zum anderen von einem Rückschlagventil, das auf dem Auslass einer Entleerungspumpe (P2) positioniert ist, wobei der Unterdruck von einer Vakuumpumpe gewährleistet wird.

## Claims

1. A system (1000) for separating and purifying two gases constituting a gas mixture, comprising a first separation column (120) in the form of a tank (150) surmounted by a separation duct (160), the diameter of the cross section of said tank (150) being at least 2 times greater than that of said separation duct (160), a purified gas outlet (168) being arranged at the top of said duct (160) and a pressurized water inlet (164) being arranged below said purified gas outlet, said separation duct further comprising a lining (161) through which the water flows, while said gas mixture rises water in a counter flow from an orifice (163) located in the lower quarter of said duct (160), in order to dissolve one of the two gases in water, and to let the other gas discharge towards the purified gas outlet (168); said system being **characterized in that** it further comprises a first reservoir (110) in fluid communication with said first separation column (120) via two channels (152; 165), said reservoir comprising, at its upper end, an inlet (115) through which said gas mixture is injected under pressure, the first fluid communication channel (152) connects an orifice (153) located in the bottom of the tank (150) of the separation column (120) to an orifice (112) located in a lower third of the reservoir (110), said first channel (152) being able to balance the level of water contained in the tank (150) and in the reservoir (110) according to the principle of communicating vessels; and **in that** the second fluid communication channel (165) connects the inlet orifice (163) of said gas mixture, located under the lining (161) of the separation duct (160), to an orifice (114) located in an upper third of the reservoir (110), so as to convey said gas mixture injected under pressure by the top (115) of the reservoir (110), towards the inlet orifice (163) of the separation duct (160).

2. The system according to claim 1, **characterized in that** the first fluid communication channel (152) has a diameter 5 to 7 times smaller than that of the tank (150) and of the reservoir (110) and comprises at least two bends.

3. The system according to claim 1 or 2, **characterized in that** it further comprises a second separation column (220) supplied, by an inlet (264) arranged in the upper part, with carbonated water derived from the first reservoir (110), said second column being in the form of a tank (250) surmounted by a separation duct (260), the diameter of the cross section of said tank (250) being at least 2 times greater than that of said separation duct (260), said separation duct (260) further comprising a lining (261) through which the carbonated water flows; and **in that** said second separation column (220) is in fluid communication with a second reservoir (210) an outlet orifice (215) of which, located at its top and connected to a vacuum pump, allows discharging the gas desorbing from water towards a dedicated recovery means, the fluid communication between the second separation column (220) and said second reservoir (210) being made by means of a third and a fourth channel (252; 265); and **in that** the third fluid communication channel (252) connects an orifice (253) located in the bottom of the tank (250) of the second separation column (220) to an orifice (212) located in a lower third of the second reservoir (210), said third channel (252) being able to balance the level of water contained in the tank (250) and in the second reservoir (210) according to the principle of communicating vessels; and **in that** the fourth fluid communication channel (265) connects an outlet orifice (263) for the gas desorbing from water, located under the lining (261) of the second separation duct (260), to an orifice (214) arranged in an upper third of said second reservoir (210), so as to convey said gas, desorbing from water, from the outlet orifice (263) of the separation duct (260) to the outlet orifice (215) of said second reservoir (210).

4. The system according to claim 3, **characterized in that** the third fluid communication channel (252) has a diameter 5 to 7 times smaller than that of the tank (250) and of the reservoir (210) and comprises at least two bends.

5. The system according to any of claims 3 or 4, **characterized in that** the second and fourth fluid communication channels (165, 265), allowing gas to be conveyed, have a section whose diameter widens from the orifice (114, 214) of the reservoir (110, 210) to the orifice (163, 263) of the separation duct (160, 260), so that the diameter of the orifice (163, 263) arranged in the separation duct (160, 260) is at least twice as large as that of the orifice (114, 214) arranged in the reservoir.

6. The system according to any one of claims 3 to 5, **characterized in that** the first and/or the second reservoir (110; 210) comprise(s) three probes (N1, N2, N3; N4, N5, N6), disposed one above the other on the wall of said reservoir (110; 210), able to detect the level of water in said reservoir and connected to a control unit of the system which allows triggering, depending on the level of water detected in said reservoir (110, 210), the operation or stoppage of a first water pump (P1) allowing the supply with pressurized water of the first separation duct (160) and/or of a compressor allowing the injection of said pressurized gas mixture into said first reservoir (110) and/or of a solenoid valve (E) connected at the bottom of said first reservoir (110) to allow draining of said first reservoir (110) and the supply with gasified water of the second separation duct (260) and/or of a vacuum pump allowing the discharge of the gas desorbing from water and/or of a second water pump (P2) connected at the bottom of said second reservoir (210) to allow draining of said second reservoir (210).

7. The system according to any one of claims 1 to 6, **characterized in that** it comprises a water cooling means positioned upstream of the pressurized water inlet (164) of the first separation column (120) and able to cool the water to a temperature below 15°C.

8. A method for separating and purifying two gases constituting a gas mixture implemented from a system according to any one of claims 3 to 6, **characterized in that** the pressure prevailing in the first separation column (120) and in the first reservoir (110) is greater than 3 bars and the pressure prevailing in the second separation column (220) and in the second reservoir (210) is lower than -0.5 bar.

9. The method according to claim 8, **characterized in that** the water is cooled to a temperature less than 15° upstream of the pressurized water inlet (164) of the first separation column (120) .

10. The method according to any of claims 8 or 9, **characterized in that** the flow rate of the water injected under pressure into the first separation column (120) is comprised between 10 and 40 L/min.

11. The method according to any one of claims 8 to 10, **characterized in that** the gas mixture is a biogas, the watersoluble gas that dissolves in water is carbon dioxide (CO₂) and the purified gas that discharges in the upper part of the first separation duct is methane (CH₄).

12. The method according to any one of claims 8 to 11, **characterized in that** the pressure prevailing in the first separation column (120) and in the first reservoir (110) depends on the one hand on the introduction of the gas mixture through the orifice (115) and on the other hand on an introduction of chilled water, through a water pump (P1) by the water inlet (164) in the upper part of the column (120) and retained by a solenoid valve (E) at the end of a channel (116) connected to an orifice arranged in the curved bottom of the reservoir (110).

13. The method according to any one of claims 8 to 12, **characterized in that** the depression prevailing in the second separation column (220) and in the second reservoir (210) depends on the one hand on a solenoid valve (E) positioned at the end of a channel (116) connected to an orifice arranged in the curved bottom of the reservoir (110) and on the other hand on a check valve positioned on the outlet of a drain pump (P2), the depression being ensured by a vacuum pump.
